# EUROPEAN PATENT SPECIFICATION

(11) **EP 3 186 815 B1**
(45) Date of publication and mention of the grant of the patent: **26.06.2019**
(21) Application number: 14762108.0
(22) Date of filing: 26.08.2014
(51) Int. Cl.: H01G 4/32, H01G 4/35, H01G 4/12, H01G 4/015

(54) **PROCESS FOR PRODUCING A ROLL-UP CAPACITOR AND ROLL-UP CAPACITOR OBTAINED BY THE PROCESS**
VERFAHREN UM EIN WICKELTYPE KONDENSATOR ZU PRODUZIEREN UND WICKELTYPE KONDENSATOR
PROCÉDÉ DE FABRICATION D'UN CONDENSATEUR ENROULÉ ET CONDENSATEUR OBTENU PAR LEDIT PROCÉDÉ

(43) Date of publication of application: 05.07.2017
(73) Proprietor: Murata Manufacturing Co., Ltd., Nagaokakyo-shi, Kyoto 617-8555 (JP); Leibniz Institute for Solid State and Materials Research Dresden, 01069 Dresden (DE)
(72) Inventor: SUZUKI, Shoichiro, Nagaokakyo-shi, Kyoto 617-8555 (JP); KOUTSAROFF, Ivoyl P, Nagaokakyo-shi, Kyoto 617-8555 (JP); BANNO, Koichi, Nagaokakyo-shi, Kyoto 617-8555 (JP); SCHMIDT, Oliver G, 01069 Dresden (DE); GRIMM, Daniel, 01069 Dresden (DE)
(74) Representative: Rauschenbach, Marion
(86) International application number: PCT/JP2014/072853
(87) International publication number: WO 2016/031077

(56) References cited:
- EP-A1- 2 023 357
- EP-A2- 2 136 380
- EP-A2- 2 304 818
- US-A1- 2014 103 486
- US-A1- 2014 234 977

## Description

### Technical Field

The present invention relates to a capacitor and a process for producing thereof.

### Background Art

Recently, a capacitor which has a higher capacitance and a smaller size is required in association with a high-density packaging of an electronic apparatus. As such capacitor, for example, Patent Literature 1 discloses a roll-up type capacitor wherein a laminate in which a first electrically insulating layer, a first electrically conducting layer, a second electrically insulating layer, and a second electrically conducting layer are laminated is rolled-up.

Such roll-up type capacitor is produced as follows. A sacrificial layer is firstly formed on a substrate, and the first electrically insulating layer, the first electrically conducting layer, the second electrically insulating layer, and the second electrically conducting layer are laminated thereon to obtain the laminate. An etching solution is fed from a side of the laminate from which the rolling-up is started, thereby gradually removing the sacrificial layer. By the removal of the sacrificial layer, the laminate peels from the substance and rolls-up. Finally, electrode terminals are connected to produce the roll-up type capacitor disclosed in Patent Literature 1.

### Prior Art Documents

### Patent Literature

Patent Literature 1: EP 2 023 357 A1

### Summary of the Invention

### Problem to be Solved by the Invention

It is preferable to use a dielectric material having a high permittivity as a material of the dielectric layer in order to achieve a high capacitance. A perovskite type dielectric material is known as the dielectric material having a high permittivity. However, a treatment at a high temperature is needed to form a layer of the perovskite type dielectric material so that the layer has the high permittivity. It is found that when the perovskite type dielectric material is used in the dielectric layer of the roll-up type capacitor disclosed in Patent Literature 1, there is a possibility that components of the sacrificial layer are diffused into an adjacent layer and the sacrificial layer disappears due to the treatment at the high temperature for forming the layer of the perovskite type dielectric material. When the sacrificial layer is diffused into the adjacent layer and disappears, a problem occurs that even if the etching treatment is performed, the laminate becomes difficult to peel from the substrate and roll-up. Additionally, when the adjacent layer is an electrode layer, a problem occurs that an equivalent series resistance (ESR) of this electrode layer is increased.

An object of the present invention is to provide a roll-up type capacitor having a higher capacitance and a process for producing the roll-up type capacitor.

### Means to Solve the Problem

The present inventors have carried out extensive studies to solve the problem and found that by forming a diffusion-preventing layer on the sacrificial layer by using an atomic layer deposition (ALD) method, it is possible to prevent the sacrificial layer from diffusing into the adjacent layer, and produce the roll-up type capacitor having the high capacitance, even if the treatment at the high temperature is performed.

In the first aspect, the present invention provides a roll-up type capacitor which comprises a diffusion-preventing layer, a lower electrode layer, a dielectric layer and an upper electrode layer wherein a laminate in which the diffusion-preventing layer, the lower electrode layer, the dielectric layer and the upper electrode layer are laminated in this order is rolled-up so that the upper electrode layer is present on the inner side, and the diffusion-preventing layer is formed by an atomic layer deposition method.

In the second aspect, the present invention provides a process for producing the roll-up type capacitor described above which comprises the following steps of:
forming a sacrificial layer on a substrate;
forming a diffusion-preventing layer on the sacrificial layer by using an atomic layer deposition method;
forming a lower electrode layer, a dielectric layer and an upper electrode layer on the diffusion-preventing layer in order to obtain a laminate; and
rolling-up the laminate by removing the sacrificial layer.

### Effect of the Invention

According to the present invention, the roll-up type capacitor having a higher capacitance is provided by the formation of the diffusion-preventing layer on the sacrificial layer by using the atomic layer deposition method.

### Brief Description of the Drawings

Figure 1 schematically shows a roll-up type capacitor of one embodiment of the present invention in its cross-sectional view.
Figure 2 schematically shows a roll-up process of a laminate according to the method of the present invention.
Figure 3 schematically shows a laminate for a roll-up type capacitor in one embodiment of the present invention.
Figures 4 and 5 schematically show modification of a laminate for a roll-up type capacitor in one embodiment of the present invention.

### Embodiments to Carry Out the Invention

The roll-up type capacitor of the present invention and the process for producing thereof will be explained below with reference to the accompanied drawings. It is noted that the shape and configuration of the roll-up type capacitor in this embodiment is not limited to the illustrated examples.

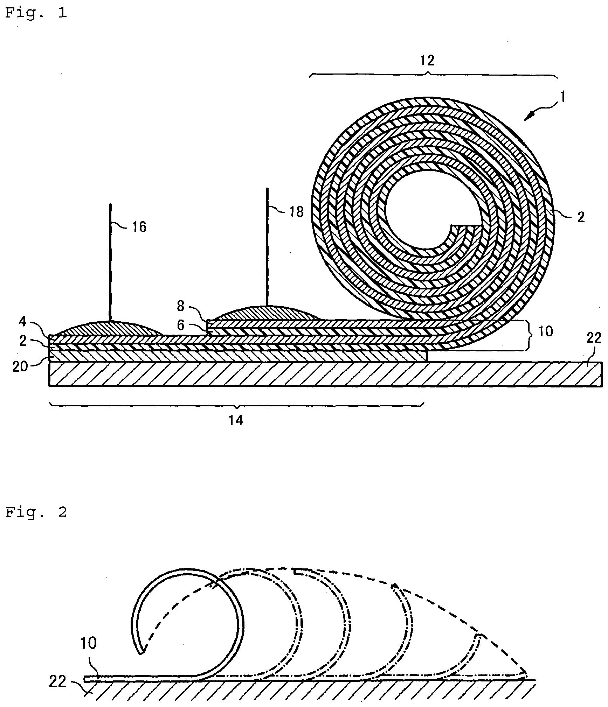

As schematically shown in Fig. 1, a capacitor 1 in this embodiment comprises a main body 12 which is a rolled-up part of a laminate 10 in which a diffusion-preventing layer 2, a lower electrode layer 4, a dielectric layer 6 and an upper electrode layer 8 are laminated in this order and an extraction part 14 which is an unrolled-up part of the laminate 10. In the extraction part 14, a first terminal 16 is electrically connected to the lower electrode layer 4 and a second terminal 18 is electrically connected to the upper electrode layer 8. It is noted that though there is a sacrificial layer 20 and a substrate 22 in Fig. 1, they are derived from the producing and they may be removed when the capacitor 1 is actually used.

The capacitor 1 in this embodiment can be generally produced by the process which comprises the steps of forming the sacrificial layer on the substrate, forming the diffusion-preventing layer on the sacrificial layer by the atomic layer deposition method, and forming the lower electrode layer, the dielectric layer and the upper electrode layer on the diffusion-preventing layer in this order to obtain the laminate, and then rolling-up the laminate by removing the sacrificial layer. In particular, the capacitor 1 is produced as follows.

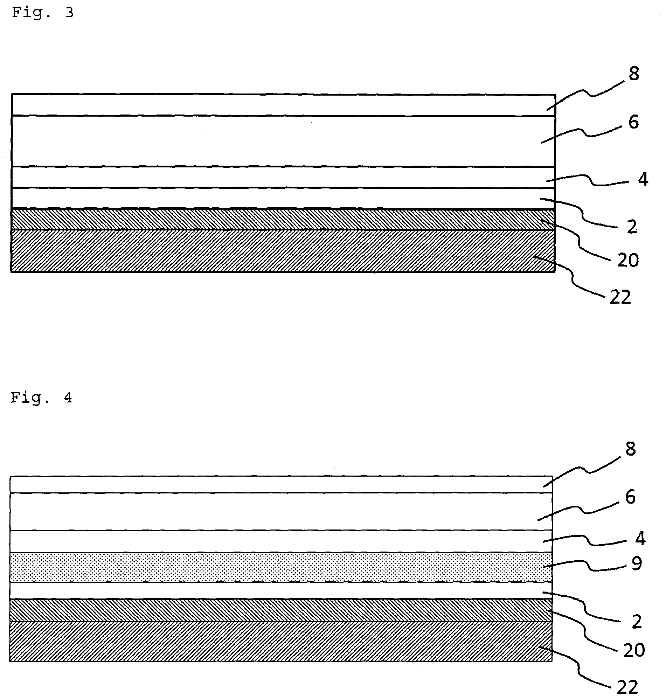

In reference to Fig. 3, firstly, the substrate 22 is provided.

A material forming the substrate is not particularly limited but preferable to be a material which has no adverse effect on the formation of the sacrificial layer and is stable against an etching solution described below. Examples of such material include silicon, silica, magnesia, and the like.

Next, the sacrificial layer 20 is formed on the substrate 22.

A material forming the sacrificial layer is not particularly limited as long as it is a material which is able to be removed, for example by an etching treatment after the formation of the laminate, but is preferably germanium oxide because it is relatively stable under a high temperature.

A thickness of the sacrificial layer is not particularly limited, but is for example 5-100 nm, preferably 10-30 nm.

A process for forming the sacrificial layer is not particular limited, and the sacrificial layer may be directly formed on the substrate or it may be formed by the application of a membrane which is separately formed to the substrate. Examples of the method for directly forming the sacrificial layer on the substrate include, for example, a vacuum deposition method, a chemical vapor deposition method, a sputtering method, a pulsed laser deposition (PLD) method, and the like.

Alternatively, a precursor layer may be formed on the substrate and treated to obtain the sacrificial layer. For example, a metal layer may be formed on the substrate and oxidized to obtain the sacrificial layer.

Next, the diffusion-preventing layer 2 is formed on the sacrificial layer.

The diffusion-preventing layer is formed by the ALD method. The ALD method provides a membrane having very high homogeneity and high density because the ALD method forms the membrane by depositing an atomic layer one by one by a reaction gas containing a raw material constituting the layer. By forming the diffusion-preventing layer on the sacrificial layer by the ALD method, it is possible to efficiently suppress the diffusion of the components constituting the sacrificial layer into another layer, for example, the lower electrode layer. Additionally, since the diffusion-preventing layer formed by the ALD method is very thin, has a high homogeneity and high density, the diffusion-preventing layer can be a membrane which has a low leakage current and high insulation. It is noted that since the membrane formed by the ALD method is mainly amorphous, the composition of the membrane is not limited to a stoichiometry ratio and the membrane may be constructed at various compositional ratios.

A material forming the diffusion-preventing layer is not particularly limited, but is preferably a metal oxide such as aluminum oxide (AlOₓ: for example, Al₂O₃), silicon oxide (SiOₓ: for example, SiO₂), Al-Ti complex oxide (AlTiOₓ), Si-Ti complex oxide (SiTiOₓ), hafnium oxide (HfOₓ), tantalum oxide (TaOₓ), zirconium oxide (ZrOₓ), Hf-Si complex oxide (HfSiOₓ), Zr-Si complex oxide (ZrSiOₓ), Ti-Zr complex oxide (TiZrOₓ), Ti-Zr-W complex oxide (TiZrWOₓ), titanium oxide (TiOₓ), Sr-Ti complex oxide (SrTiOₓ), Pb-Ti complex oxide (PbTiOₓ), Ba-Ti complex oxide (BaTiOₓ), Ba-Sr-Ti complex oxide (BaSrTiOₓ), Ba-Ca-Ti complex oxide (BaCaTiOₓ), Si-Al complex oxide (SiAlOₓ), Sr-Ru complex oxide (SrRuOₓ), Sr-V complex oxide (SrVOₓ); metal nitride such as aluminum nitride (AlN_{y}), silicon nitride (SiN_{y}), Al-Sc complex nitride (AlScN_{y}), titanium nitride (TiN_{y}), and the like; or a metal oxynitride such as aluminum oxynitride (AlOₓN_{y}), silicone oxynitride (SiOₓN_{y}), Hf-Si complex oxynitride (HfSiOₓN_{y}), Si-C complex oxynitride (SiC_{z}OₓN_{y}) and the like, and particularly is preferably AlO_{z} and SiO_{z}. It is noted that the above formulae are only intended to show a constitution of the atoms and does not limit the composition. In other words, x, y and z which accompany O, N and C, respectively, may be arbitrary values, and a present ratio of the atoms comprising the metal atoms is arbitrary.

A thickness of the diffusion-preventing layer is not particularly limited, but is, for example, preferably 5-30 nm, more preferably 5-10 nm. By regulating the thickness of the diffusion-preventing layer to 5 nm or more, the diffusion of the components constituting the sacrificial layer can be more effectively suppressed. In addition, when the diffusion-preventing layer is formed of an insulating material, the insulation property can be increased, therefore a leakage current can be reduced. By regulating the thickness of the diffusion-preventing layer to 30 nm or less, in particular 10 nm or less, a diameter of the roll can be more reduced, therefore the size can be more reduced. In addition, larger capacitance can be obtained.

Next, the lower electrode layer is formed on the diffusion-preventing layer 4.

A material forming the lower electrode layer is not particular limited as long as it is electrically conductive. Examples of the material include Ni, Cu, Al, W, Ti, Ag, Au, Pt, Zn, Sn, Pb, Fe, Cr, Mo, Ru, Pd, Ta and an alloy thereof, for example, CuNi, AuNi, AuSn and a metal oxide and a metal oxynitride such as TiN, TiAlN, TiON, TiAlON, TaN, and the like. Preferably, Pt is used.

A thickness of the lower electrode layer is not particularly limited, but is, for example, preferably 10-50 nm. By more increasing the thickness of the lower electrode layer, for example by regulating the thickness to 50 nm, the ESR can be more reduced. By more reducing the thickness of the lower electrode layer, for example by regulating the thickness to 10 nm, a diameter of the roll can be more reduced, therefore the size of the capacitor can be more reduced.

A process for forming the lower electrode layer is not particular limited, and the lower electrode layer may be directly formed on the diffusion-preventing layer or it may be formed by the application of a membrane which is separately formed to the diffusion-preventing layer. Examples of the method for directly forming the lower electrode layer on the diffusion-preventing layer include a vacuum deposition method, a chemical vapor deposition method, a sputtering method, an ALD method, a PLD method, and the like.

Next, the dielectric layer 6 is formed on the lower electrode layer.

A material forming the dielectric layer is not particular limited as long as it is electrically insulating. In order to obtain a higher capacitance, a material having a higher permittivity is preferable. Examples of the material having a high permittivity include a perovskite type complex oxide of the formula ABO₃ (wherein A and B are an arbitrary metal atom), and preferably is the perovskite type complex oxide containing titanium (Ti) (hereinafter, referred to as a "titanium (Ti)-perovskite type complex oxide"). Examples of the preferable Ti-perovskite type complex oxide include BaTiO₃, SrTiO₃, CaTiO₃, (BaSr)TiO₃, (BaCa)TiO₃, (SrCa)TiO₃, Ba(TiZr)O₃, Sr(TiZr)O₃, Ca(TiZr)O₃, (BaSr)(TiZr)O₃, (BaCa)(TiZr)O₃, (SrCa)(TiZr)O₃. Since the Ti-perovskite type complex oxide has high specific permittivity, it has an advantage in that the capacitance of the capacitor can be increased.

A thickness of the dielectric layer is not particular limited, but is, for example, preferable 10-100 nm, more preferably 10-50 nm. By regulating the thickness of the dielectric layer to 10 nm or more, the insulation property can be increased, therefore a leakage current can be reduced. By regulating the thickness of the dielectric layer to 100 nm or less, a diameter of the roll can be more reduced, therefore the size can be more reduced.

A process for forming the dielectric layer is not particular limited, and the dielectric layer may be directly formed on the lower electrode layer or it may be formed by the application of a membrane which is separately formed to the lower electrode layer. Examples of the method for directly forming the dielectric layer on the lower electrode layer include a vacuum deposition method, a chemical vapor deposition method, a sputtering method, an ALD method, a PLD method, and the like. When the material forming the dielectric layer is the perovskite type complex oxide, the dielectric layer is preferably formed by the sputtering method.

When the dielectric layer is formed by the sputtering method, it is preferable to perform the formation of the layer at the substrate temperature of 500-600°C. By the treatment at such high temperature, the crystallinity of the obtained dielectric layer is increased, therefore, higher specific permittivity can be obtained.

Next, the upper electrode layer 8 is formed on the dielectric layer.

A material forming the upper electrode layer is not particular limited as long as it is electrically conductive. Examples of the material forming the upper electrode layer include Ni, Cu, Al, W, Ti, Ag, Au, Pt, Zn, Sn, Pb, Fe, Cr, Mo, Ru, Pd, Ta and an alloy thereof, for example, CuNi, AuNi, AuSn, and a metal oxide and a metal oxynitride such as TiN, TiAlN, TiON, TiAlON, TaN, and the like. Preferably, Cr is used.

A thickness of the upper electrode layer is not particular limited but is, for example, preferably 10-50 nm, more preferably 10-30 nm. By more increasing the thickness of the upper electrode layer, for example by regulating the thickness to 50 nm, the ESR can be more reduced. By more reducing the thickness of the upper electrode layer, for example by regulating the thickness to 30 nm or less, a diameter of the roll can be more reduced, therefore the size of the capacitor can be more reduced.

A process for forming the upper electrode layer is not particular limited, and the upper electrode layer may be directly formed on the dielectric layer or it may be formed by the application of a membrane which is separately formed to the dielectric layer. Examples of the method for directly forming the upper electrode layer on the dielectric layer include a vacuum deposition method, a chemical vapor deposition method, a sputtering method, an ALD method, a PLD method, and the like.

As described above, the sacrificial layer 20 is formed on the substrate 22, and the laminate 10 in which the diffusion-preventing layer 2, the lower electrode layer 4, the dielectric layer 6 and the upper electrode layer 8 are laminated in this order is further formed thereon.

The laminate has an internal stress in the direction from the lower electrode layer to the upper electrode layer. Such internal stress can be caused by the provision of a tensile stress to a lower layer of the laminate, for example the diffusion-preventing layer or the lower electrode layer and/or by the provision of a compressive stress to an upper layer of the laminate, for example, the upper electrode layer or the dielectric layer. Preferably, the laminate is formed so that the lower electrode layer has the tensile stress and the upper electrode layer has the compressive stress. Those skilled in the art can appropriately select a material and a formation method of the layer to provide the tensile stress or the compressive stress. For example, the desired internal stress can be obtained by the formation of the lower electrode layer from Pt with the sputtering method and the formation of the upper electrode layer from Cr with the vacuum deposition method.

By having the internal stress in the direction from the lower electrode layer to the upper electrode layer, the laminate can bend and self-roll-up due to the stress when it is released from the substrate.

In a preferable embodiment, the lower electrode layer is formed of platinum, the upper electrode layer is formed of chrome, and the dielectric layer is formed of the Ti-perovskite type complex oxide. By such constitution, a capacitor having a higher capacitance can be obtained.

It is noted that though the laminate 10 in this embodiment consists of the diffusion-preventing layer 2, the lower electrode layer 4, the dielectric layer 6 and the upper electrode layer 8, the present invention is not limited thereto and may have multiple same layers or further layers as long as it can exert a function as a capacitor.

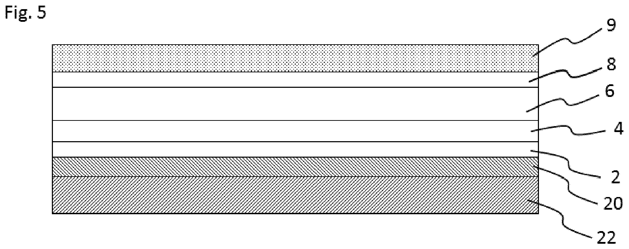

In one embodiment, as illustrated in Figs. 4 and 5, a second dielectric 9 layer may be formed between the diffusion-preventing layer and the lower electrode layer or on the upper electrode layer.

The second dielectric layer 9 has a function of ensuring insulation between the lower electrode layer and the upper electrode layer even when the diffusion-preventing layer is electrically conductive.

Examples of a material forming the second electrode layer may be the same material as that forming the dielectric layer 6 or other material. The material other than material forming the dielectric layer 6 includes titanium oxide (TiOₓ) and chromium oxide (CrOₓ). When the second dielectric layer is provide between the diffusion-preventing and the lower electrode layer, since titanium oxide (TiOₓ) has an adhesion to the diffusion-preventing and the lower electrode layer, an effect to prevent from pealing in the laminate can be exerted. In addition, as illustrated in Fig. 5, when the second dielectric layer is formed on the upper electrode layer, it can exert an effect to decrease damage such as oxidation of the upper electrode layer when the sacrificial layer is removed by using an etching solution.

A process for forming the second dielectric layer is not particular limited, and the adhering layer may be directly formed on a layer under the adhering layer or it may be formed by the application of a membrane which is separately formed to the layer under the adhering layer. Examples of the method for directly forming the adhering layer on the layer under the adhering layer include a vacuum deposition method, a chemical vapor deposition method, a sputtering method, an ALD method, a PLD method, and the like.

In other embodiment, an interfacial layer may be formed between the dielectric layer and the upper electrode layer.

The interfacial layer has a function of suppressing a leakage current caused by a schottky junction.

Examples of a material forming the interfacial layer include Ni and Pd.

A process for forming the interfacial layer is not particular limited, and the interfacial layer may be directly formed on a layer under the interfacial layer or it may be formed by the application of a membrane which is separately formed to the layer under the interfacial layer. Examples of the method for directly forming the interfacial layer on the layer under the adhering layer include a vacuum deposition method, a chemical vapor deposition method, a sputtering method, an ALD method, a PLD method, and the like.

Next, the laminate obtained as mentioned above is rolled-up by the removal of the sacrificial layer.

The sacrificial layer is gradually removed from one side of the laminate. As shown in Fig. 2 (the sacrificial layer is not shown), the laminate separates from the substrate in order from the part in which the sacrificial layer is removed, and bends and rolls due to the internal stress to form the main body 12. The number of turns in the main body is not particular limited and may be one or several. The number of turns can be selected depending on the size (diameter) and the planar area to be compacted into the roll-up type capacitor.

A process for removal of the sacrificial layer is not particular limited, but is preferably an etching method which etches the sacrificial layer with an etching solution.

The etching solution can be appropriately selected depending on the material forming the sacrificial layer as well as the constituent layers of the laminate. For example, when the sacrificial layer is formed of GeO₂, hydrogen peroxide aqueous solution is preferably used.

Finally, the first terminal 16 and the second terminal 18 are connected to the lower electrode layer 4 and the upper electrode layer 8, respectively, to obtain the roll-up type capacitor of the present invention. Those skilled in the art can appropriately select a material of the terminals and a connecting method depending on a material or shape of the electrode layers and the terminals.

Though the one embodiment of the present invention is described above, the roll-up type capacitor of the present invention is not limited to this embodiment, and can be variously modified.

### Examples

### Example 1

Four inches of a silicon substrate was provided, and a Ge layer having the thickness of 20 nm was formed by a vacuum deposition method thereon. The obtained Ge layer was oxidized under the atmosphere of N₂/O₂ at a temperature of 150°C to form a sacrificial layer of GeO₂. On the obtained sacrificial layer, an Al₂O₃ layer having the thickness of 7 nm as the diffusion-preventing layer was formed by an ALD method. Then, on the obtained diffusion-preventing layer, a TiOₓ layer having the thickness of 7 nm as the adhering layer was formed by a sputtering method, and a Pt layer having the thickness of 25 nm as the lower electrode layer was formed thereon by a sputtering method.

Next, a (BaSr)TiO₃ layer having the thickness of 35 nm as a dielectric layer was formed by using a sputtering method at the substrate temperature of 520°C.

On the dielectric layer, a Ni layer having the thickness of 5 nm as the interfacial layer was formed by a vacuum deposition method, then, a Cr layer having the thickness of 25 nm as the upper electrode layer was formed thereon by a vacuum deposition method to produce a laminate.

The obtained laminate was masked in a prescribed pattern, and patterning was performed by a dry etching using a fluorine gas to form a rectangular pattern (the width: 200 µm; the length: 1 mm). The hydrogen peroxide aqueous solution was fed from one end of this pattern to gradually etch the GeO₂ sacrificial layer.

As the GeO₂ sacrificial layer was etched, the laminate rolled-up to produce the cylindrical roll-up type capacitor having a diameter of 50 µm and a length of 200 µm.

An alternating-current voltage (1 KHz, 0.1 Vrms) was applied between the upper electrode layer and the lower electrode layer of the obtained roll-up type capacitor, and the capacitance was measured. In the result, the capacitance was 5 nF.

### Comparative Example 1

The laminate was produced in the same manner as Example 1 except that the diffusion-preventing layer of Al₂O₃ was not provided. This laminate was etched with the hydrogen peroxide aqueous solution in the same manner as Example 1. However, the laminate did not roll-up.

### Comparative Example 2

The laminate was produced in the same manner as Example 1 except that the diffusion-preventing layer of Al₂O₃ (the thickness: 7 nm) by a sputtering method. This laminate was etched with the hydrogen peroxide aqueous solution in the same manner as Example 1. However, the laminate did not roll-up.

The cross-section surface of the samples of Comparative Examples 1 and 2 was cutout by a FIB (Focused Ion Beam) method, and observed by an electron microscope. In the result, the diffusion of the sacrificial layer was observed.

From these results, it was confirmed that it becomes possible to prevent the disappearance of the sacrificial layer due to the diffusion into another layer and to roll-up the laminate successfully by the formation of the diffusion-preventing layer by the ALD method, even when the dielectric layer having the high specific permittivity is formed at a high temperature. In addition, the roll-up type capacitor thus obtained has high capacitance despite it is a very small size.

### Industrial Applicability

The capacitor of the present invention can be used in various electrical apparatuses since it is a small size and has large capacitance.

### Explanation of the Reference Numerals

1, capacitor; 2, diffusion-preventing layer;
4, lower electrode layer; 6, dielectric layer;
8, upper electrode layer; 9, second dielectric;
10, laminate; 12, main body;
14, extraction part; 16, first terminal;
18, second terminal; 20, sacrificial layer; 22, substrate.

## Claims

1. A roll-up type capacitor which comprises a diffusion-preventing layer, a lower electrode layer, a dielectric layer and an upper electrode layer wherein a laminate in which the diffusion-preventing layer, the lower electrode layer, the dielectric layer and the upper electrode layer are laminated in this order is rolled-up so that the upper electrode layer is present on the inner side, and the diffusion-preventing layer is formed by an atomic layer deposition method.

2. The roll-up type capacitor according to claim 1 wherein the diffusion-preventing layer is formed of aluminum oxide.

3. The roll-up type capacitor according to claim 1 or claim 2 wherein a thickness of the diffusion-preventing layer is 5-10 nm.

4. The roll-up type capacitor according to any one of claims 1-3 wherein the dielectric layer is formed of a perovskite type complex oxide.

5. The roll-up type capacitor according to claim 4 wherein the perovskite type complex oxide is a titanium-perovskite type complex oxide.

6. The roll-up type capacitor according to claim 4 or claim 5 wherein the perovskite type complex oxide is BaTiO₃, SrTiO₃, CaTiO₃, (BaSr)TiO₃, (BaCa)TiO₃, (SrCa)TiO₃, Ba(TiZr)O₃, Sr(TiZr)O₃, Ca(TiZr)O₃, (BaSr)(TiZr)O₃, (BaCa)(TiZr)O₃ or (SrCa)(TiZr)O₃.

7. The roll-up type capacitor according to any one of claims 1-6 wherein the lower electrode layer is formed of platinum, the upper electrode layer is formed of chrome, and the dielectric layer is formed of the titanium-perovskite type complex oxide.

8. The roll-up type capacitor according to any one of claims 1-7 which further comprises a second dielectric layer between the diffusion-preventing layer and the lower electrode layer or on the upper electrode layer.

9. The roll-up type capacitor according to any one of claims 1-8 which further comprises an interfacial layer between the dielectric layer and the upper electrode layer.

10. A process for producing the roll-up type capacitor according to claim 1 which comprises the following steps of :
forming a sacrificial layer on a substrate;
forming a diffusion-preventing layer on the sacrificial layer by using an atomic layer deposition method;
forming a lower electrode layer, a dielectric layer and an upper electrode layer on the diffusion-preventing layer in order to obtain a laminate; and
rolling-up the laminate by removing the sacrificial layer.

11. The process according to claim 10 which further comprises a step of forming an adhering layer between the diffusion-preventing layer and the lower electrode layer.

12. The process according to claim 10 or claim 11 which further comprises a step of forming an interfacial layer between the dielectric layer and the upper electrode layer.

## Patentansprüche

1. Kondensator vom Wickeltyp, der eine Diffusionsverhinderungsschicht, eine untere Elektrodenschicht, eine dielektrische Schicht und eine obere Elektrodenschicht umfasst, wobei ein Laminat, in dem die Diffusionsverhinderungsschicht, die untere Elektrodenschicht, die dielektrische Schicht und die obere Elektrodenschicht in dieser Reihenfolge laminiert worden sind, aufgewickelt wird, so dass die obere Elektrodenschicht auf der Innenseite vorhanden ist, und die Diffusionsverhinderungsschicht mittels eines Atomlagenabscheidungsverfahrens gebildet ist.

2. Kondensator vom Wickeltyp nach Anspruch 1, wobei die Diffusionsverhinderungsschicht aus Aluminiumoxid gebildet ist.

3. Kondensator vom Wickeltyp nach Anspruch 1 oder Anspruch 2, wobei eine Dicke der Diffusionsverhinderungsschicht 5 bis 10 nm beträgt.

4. Kondensator vom Wickeltyp nach einem der Ansprüche 1 bis 3, wobei die dielektrische Schicht aus einem komplexen Oxid vom Perovskittyp gebildet ist.

5. Kondensator vom Wickeltyp nach Anspruch 4, wobei das komplexe Oxid vom Perovskittyp ein komplexes Oxid vom Titan-Perovskittyp ist.

6. Kondensator vom Wickeltyp nach Anspruch 4 oder Anspruch 5, wobei das komplexe Oxid vom Perovskittyp Ba-TiO₃, SrTiO₃, CaTiO₃, (BaSr)TiO₃, (BaCa)TiO₃, (SrCa)TiO₃, Ba(TiZr)O₃, Sr(TiZr)O₃, Ca(TiZr)O₃, (BaSr)(TiZr)O₃, (BaCa)(TiZr)O₃ oder (SrCa)(TiZr)O₃ ist.

7. Kondensator vom Wickeltyp nach einem der Ansprüche 1 bis 6, wobei die untere Elektrodenschicht aus Platin gebildet ist, die obere Elektrodenschicht aus Chrom gebildet ist, und die dielektrische Schicht aus dem komplexen Oxid vom Titan-Perovskittyp gebildet ist.

8. Kondensator vom Wickeltyp nach einem der Ansprüche 1 bis 7, der ferner eine zweite dielektrische Schicht zwischen der Diffusionsverhinderungsschicht und der unteren Elektrodenschicht oder auf der oberen Elektrodenschicht umfasst.

9. Kondensator vom Wickeltyp nach einem der Ansprüche 1 bis 8, der ferner eine Grenzflächenschicht zwischen der dielektrischen Schicht und der oberen Elektrodenschicht umfasst.

10. Verfahren zur Herstellung des Kondensators vom Wickeltyp nach Anspruch 1, das die folgenden Schritte umfasst:
Bilden einer Opferschicht auf einem Substrat;
Bilden einer Diffusionsverhinderungsschicht auf der Opferschicht unter Verwendung eines Atomlagenabscheidungsverfahrens;
Bilden einer unteren Elektrodenschicht, einer dielektrischen Schicht und einer oberen Elektrodenschicht auf der Diffusionsverhinderungsschicht, um ein Laminat zu erhalten; und
Aufwickeln des Laminats durch Entfernen der Opferschicht.

11. Verfahren nach Anspruch 10, das ferner einen Schritt zum Bilden einer Haftschicht zwischen der Diffusionsverhinderungsschicht und der unteren Elektrodenschicht umfasst.

12. Verfahren nach Anspruch 10 oder Anspruch 11, das ferner einen Schritt zum Bilden einer Grenzflächenschicht zwischen der dielektrischen Schicht und der oberen Elektrodenschicht umfasst.

## Revendications

1. Condensateur du type enroulé qui comprend une couche de prévention de diffusion, une couche d'électrode inférieure, une couche diélectrique et une couche d'électrode supérieure, un stratifié dans lequel la couche de prévention de diffusion, la couche d'électrode inférieure, la couche diélectrique et la couche d'électrode supérieure sont stratifiées dans cet ordre étant enroulé de sorte que la couche d'électrode supérieure soit présente sur le côté interne, et que la couche de prévention de diffusion soit formée par un procédé de dépôt de couche atomique.

2. Condensateur du type enroulé selon la revendication 1 dans lequel la couche de prévention de diffusion est faite en oxyde d'aluminium.

3. Condensateur du type enroulé selon la revendication 1 ou la revendication 2 dans lequel une épaisseur de la couche de prévention de diffusion est de 5 à 10 nm.

4. Condensateur du type enroulé selon l'une quelconque des revendications 1 à 3 dans lequel la couche diélectrique est faite en un oxyde complexe du type pérovskite.

5. Condensateur du type enroulé selon la revendication 4 dans lequel l'oxyde complexe du type pérovskite est un oxyde complexe du type pérovskite-titane.

6. Condensateur du type enroulé selon la revendication 4 ou la revendication 5 dans lequel l'oxyde complexe du type pérovskite est BaTiO₃, SrTiO₃, CaTiO₃, (BaSr)TiO₃, (BaCa)TiO₃, (SrCa)TiO₃, Ba(TiZr)O₃, Sr(TiZr)O₃, Ca(TiZr)O₃, (BaSr)(TiZr)O₃, (BaCa)(TiZr)O₃ ou (SrCa)(TiZr)O₃.

7. Condensateur du type enroulé selon l'une quelconque des revendications 1 à 6 dans lequel la couche d'électrode inférieure est faite en platine, la couche d'électrode supérieure est faite en chrome et la couche diélectrique est faite de l'oxyde complexe du type pérovskite-titane.

8. Condensateur du type enroulé selon l'une quelconque des revendications 1 à 7 qui comprend en outre une seconde couche diélectrique entre la couche de prévention de diffusion et la couche d'électrode inférieure ou sur la couche d'électrode supérieure.

9. Condensateur du type enroulé selon l'une quelconque des revendications 1 à 8 qui comprend en outre une couche interfaciale entre la couche diélectrique et la couche d'électrode supérieure.

10. Procédé pour la production du condensateur du type enroulé selon la revendication 1 qui comprend les étapes suivantes consistant à :
former une couche sacrificielle sur un substrat ;
former une couche de prévention de diffusion sur la couche sacrificielle en utilisant un procédé de dépôt de couche atomique ;
former une couche d'électrode inférieure, une couche diélectrique et une couche d'électrode supérieure sur la couche de prévention de diffusion dans le but d'obtenir un stratifié ; et
enrouler le stratifié en éliminant la couche sacrificielle.

11. Procédé selon la revendication 10 qui comporte en outre une étape consistant à former une couche adhésive entre la couche de prévention de diffusion et la couche d'électrode inférieure.

12. Procédé selon la revendication 10 ou la revendication 11 qui comprend en outre une étape de formation d'une couche interfaciale entre la couche diélectrique et la couche d'électrode supérieure.
